# EUROPEAN PATENT APPLICATION

(11) **EP 4 682 363 A1**
(43) Date of publication of application: **21.01.2026**
(21) Application number: 25190014.8
(22) Date of filing: 16.07.2025
(51) Int. Cl.: F02C 7/32, F01D 25/04, F02C 7/36, F02K 3/06

(54) **GEARBOX ARRANGEMENT FOR DUAL SPOOL ENGINE ACCESSORIES**

(30) Priority: 16.07.2024 US 202418774708
(71) Applicant: RTX Corporation, Farmington, CT 06032 (US)
(72) Inventor: CLARK, Thomas E., Farmington, 06032 (US); MORTON, Jeffrey T., Farmington, 06032 (US)
(74) Representative: Dehns

(57) **Abstract**

A system (100; 200; 300) includes a turbine engine (110; 310), a low spool gearbox (130; 230; 330), a high spool gearbox (120; 320), and an interlink (328) mechanically coupling the low spool gearbox (130; 230; 330) to the high spool gearbox (120; 320). The turbine engine (110; 310) includes a low-pressure spool and a high-pressure spool. The low spool gearbox (130; 230; 330) is disposed within a core compartment (115) of the turbine engine (110; 310). The low spool gearbox (130; 230; 330) is configured to transfer mechanical power between the low-pressure spool and a first accessory. The high spool gearbox (120; 320) is disposed within the core compartment (115) of the turbine engine (110; 310). The high spool gearbox (120; 320) is configured to transfer mechanical power between the high-pressure spool and a second accessory.

## Description

### TECHNICAL FIELD

This disclosure generally relates to turbine engines. More specifically, this disclosure relates to gearbox arrangements for dual spool engine accessories.

### BACKGROUND

A typical turbine engine includes a high-pressure spool (high spool) and a low-pressure spool (low spool). Increasingly in electric and hybrid electric applications, dual spool power extraction and/or power injection may be utilized. In typical applications, mechanical off takes (such as towershafts) are used from both the high and low spools to either the engine core compartment and/or engine fan cases, and the mechanical off takes are integrated into a single accessory gearbox. Such applications use a large accessory gearbox to accommodate the dual mechanical off takes.

### SUMMARY

This disclosure relates to gearbox arrangements for dual spool engine accessories.

In a first embodiment, a system includes a turbine engine, a low spool gearbox, a high spool gearbox, and an interlink mechanically coupling the low spool gearbox to the high spool gearbox. The turbine engine includes a low-pressure spool and a high-pressure spool. The low spool gearbox is disposed within a core compartment of the turbine engine. The low spool gearbox is configured to transfer mechanical power between the low-pressure spool and a first accessory. The high spool gearbox is disposed within the core compartment of the turbine engine. The high spool gearbox is configured to transfer mechanical power between the high-pressure spool and a second accessory.

Any single one or any combination of the following features may be used with the first embodiment. The system may include a first oil and coolant system configured to server the low spool gearbox. The system may include a second oil and coolant system configured to ser the high spool gearbox. The second oil and coolant system may be independent from the first oil and coolant system. The interlink may include a clearance hole configured to provide load sharing between the low spool gearbox and the high spool gearbox with some independent freedom of movement between the low spool gearbox and the high spool gearbox. The system may include a plurality of structural ties. The turbine engine may include an engine core casing. The low spool gearbox may be mechanically coupled to the engine core casing via at least a first structural tie of the plurality of structural ties. The high spool gearbox may be mechanically coupled to the engine core casing via at least a second structural tie of the plurality of structural ties. At least one structural tie of the plurality of structural ties may be configured to provide vibration isolation between the engine core casing and at least one of the low spool gearbox and the high spool gearbox. The interlink or at least one structural tie of the plurality of structural ties may be configured to establish a kinematic layout for the low spool gearbox and the high spool gearbox. The low spool gearbox and the high spool gearbox may be disposed aft of an engine firewall. The low spool gearbox and the high spool gearbox may be arranged within the core compartment according to locations of the first accessory and the second accessory within the system.

In a second embodiment, an apparatus includes a low spool gearbox configured to be disposed within a core of a turbine engine. The low spool gearbox is configured to transfer mechanical power between a low-pressure spool of the turbine engine and an accessory. The low spool gearbox is configured to be mechanically coupled to a high spool gearbox via an interlink.

Any single one or any combination of the following features may be used with the second embodiment. The interlink may include a clearance hole configured to provide load sharing between the low spool gearbox and the high spool gearbox with some independent freedom of movement between the low spool gearbox and the high spool gearbox. The interlink may be configured to provide vibration isolation between the low spool gearbox and the high spool gearbox. The turbine engine may include an engine core casing. The low spool gearbox may be configured to be mechanically coupled to the engine core casing via a structural tie. The structural tie may be configured to provide vibration isolation between the engine core casing and the low spool gearbox. The apparatus may be a line removable unit (LRU) that includes the accessory.

In a third embodiment, an apparatus includes a high spool gearbox configured to be disposed within a core of a turbine engine. The high spool gearbox is configured to transfer mechanical power between a high-pressure spool of the turbine engine and an accessory. The high spool gearbox is configured to be mechanically coupled to a low spool gearbox via an interlink.

Any single one or any combination of the following features may be used with the third embodiment. The interlink may include a clearance hole configured to provide load sharing between the high spool gearbox and the low spool gearbox with some independent freedom of movement between the high spool gearbox and the low spool gearbox. The interlink may be configured to provide vibration isolation between the low spool gearbox and the high spool gearbox. The turbine engine may include an engine core casing. The high spool gearbox may be configured to be mechanically coupled to the engine core casing via a structural tie. The structural tie may be configured to provide vibration isolation between the engine core casing and the low spool gearbox.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURES 1A-1E illustrate an example system for dual spool power extraction in accordance with this disclosure;
FIGURE 2 illustrates another example system for dual spool power extraction in accordance with this disclosure; and
FIGURE 3 illustrates another example system for dual spool power extraction in accordance with this disclosure.

### DETAILED DESCRIPTION

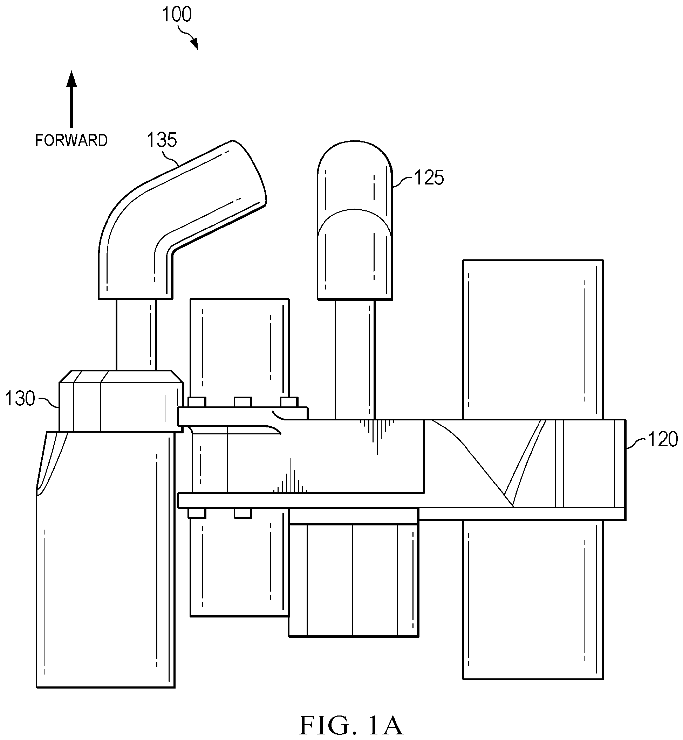

FIGURES 1A through 3, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As noted above, dual spool power extraction and/or power injection in a turbine engine may include mechanical off takes used from both the high and low spools integrated into a single large accessory gearbox. Fan bladeoff (FBO) case load management, accessory maintainability, and gearbox strength may be challenged as a result of the single large accessory gearbox. To overcome these challenges, the present disclosure provides gearbox arrangements for dual spool engine offtakes including two gearboxes. The first gearbox is integrated to a high spool offtake and accessories, and the second gearbox is integrated to a low spool offtake and accessories. The sum of the volumes of the gearboxes is less than a single equivalent gearbox due to optimized spur gear spacing and positional arrangements of the engine accessories. In some embodiments, one or both of the gearboxes are integrated in a manner as to allow the assembly to be removed from the engine core compartment as a single line removable unit (LRU), which enhances engine maintenance and modularity. As an additional benefit, the mass of each gearbox is reduced, reducing the case punch loads observed at the compressor-diffuser case flange during FBO events. Dynamic and engine vibration loads management of each gearbox may be improved relative to a single large gearbox. Furthermore, the dual gearbox arrangement allows for larger overall gearbox installations, where the sum of each gearbox may span more than a 180 degree sector of the engine core compartment if needed. In some embodiments, the first gearbox and the second gearbox may be serviced by independent oil and/or coolant systems. This may provide additional size, weight, and/or placement savings, as the independent oil and coolant systems may be sized proportionally smaller than a single oil and/or coolant system serving both gearboxes. An additional benefit is that a failure of one oil or coolant system will only affect the served gearbox.

FIGURES 1A-1E illustrate an example system 100 for dual spool power extraction in accordance with this disclosure. It should be understood that the various views of FIGURES 1A-1E omit certain components of system 100 for clarity, but that system 100 includes the aggregate of the components illustrated in FIGURES 1A-1E. As shown in FIGURES 1A-1E, system 100 includes a turbine engine 110, a high spool gearbox 120, and a low spool gearbox 130. High spool gearbox 120 and low spool gearbox 130 are disposed within a core compartment 115 of turbine engine 110. Core compartment 115 is the space between an engine core casing 116 of turbine engine 110 and an inner flow surface of an engine nacelle (not shown) of system 100. High spool gearbox 120 is configured to transfer mechanical power between a high-pressure spool of turbine engine 110 and other accessories. Low spool gearbox 130 is configured to transfer mechanical power between a low-pressure spool of turbine engine 110 and other accessories.

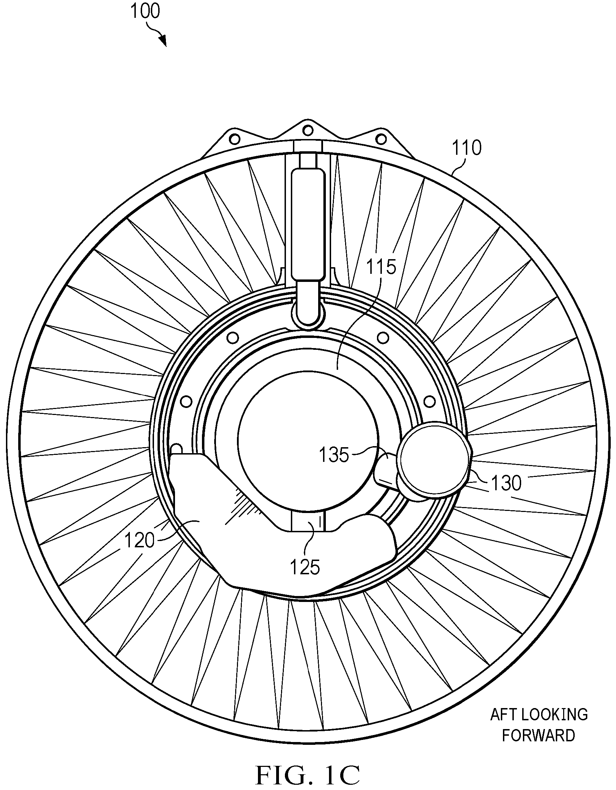

FIGURE 1A is a bottom looking up view of system 100 where a bottom side of high spool gearbox 120 is predominately visible. From the perspective of FIGURE 1C, the bottom of FIGURE 1A is a back of system 100.

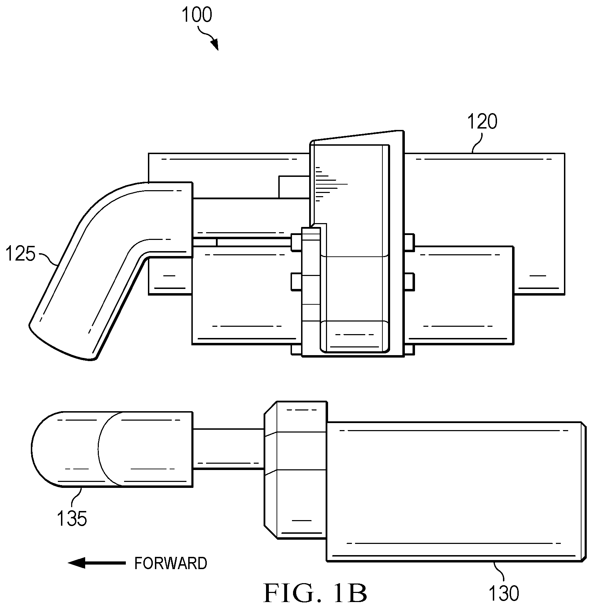

FIGURE 1B is an alternate view of system 100 where a side of low spool gearbox 130 is predominately visible.

It can be seen in FIGURES 1A and 1B that high spool gearbox 120 includes a mechanical offtake 125 which transfers the mechanical power from the high-pressure spool of turbine engine 110 to high spool gearbox 120. It can also be seen in FIGURES 1A and 1B that low spool gearbox 130 includes a mechanical offtake 135 which transfers the mechanical power from the high-pressure spool of turbine engine 110 to low spool gearbox 130.

FIGURE 1C is an aft looking forward view of system 100. It can be seen in FIGURE 1C that high spool gearbox 120 and low spool gearbox 130 are disposed within the core compartment 115 of turbine engine 110. High spool gearbox 120 and low spool gearbox 130 are arranged such that mechanical offtake 125 and mechanical offtake 135 are positioned at an approximately 70 degree angle from each other with respect to the centerline of turbine engine 110. However, the illustrative example in FIG. 1C is not intended to be so limiting and the mechanical offtakes 125, 135 may be positioned at a greater or lesser angle with respect to one another.

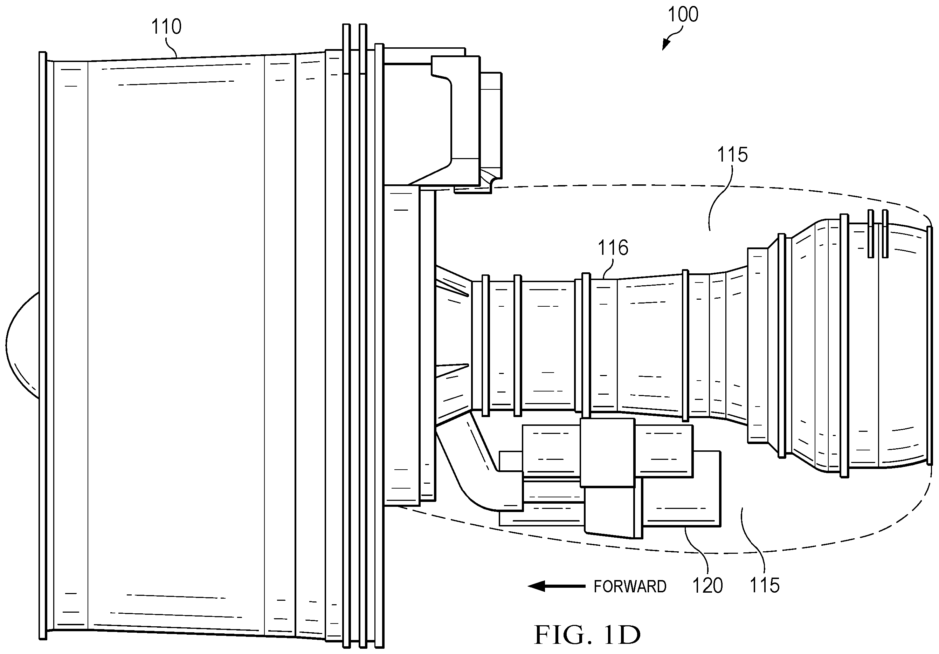

FIGURE 1D is a side view of system 100 illustrating the relative position of high spool gearbox 120 within the core compartment 115 of turbine engine 110.

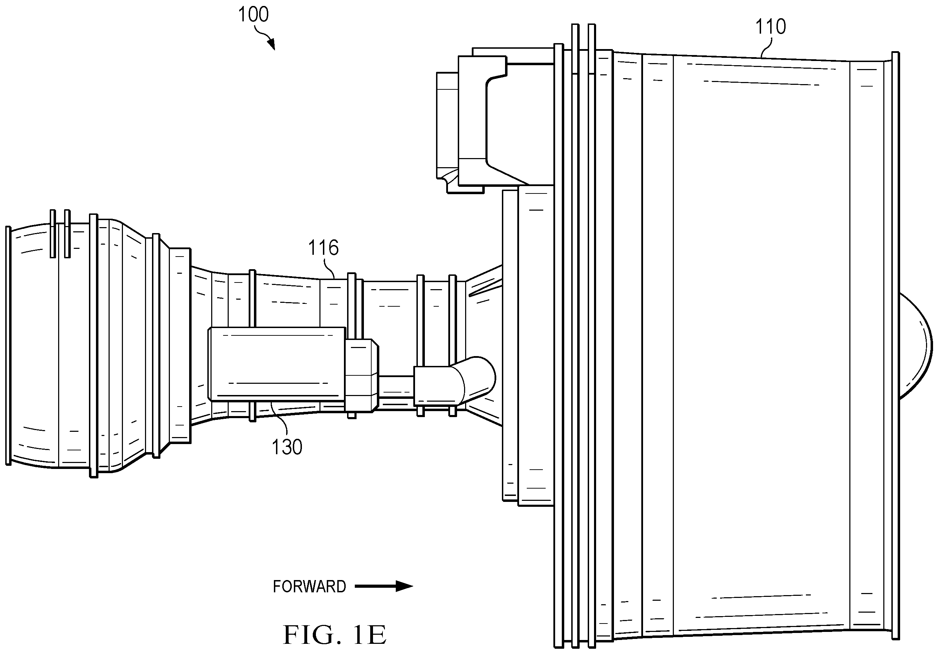

FIGURE 1E is a side view of system 100 illustrating the relative position of low spool gearbox 130 within the core compartment 115 of turbine engine 110.

In the example of FIGURES 1A-1E, high spool gearbox 120 is configured to interface with at least one accessory. That is to say, high spool gearbox 120 is configured to transfer mechanical power between high spool gearbox 120 and the at least one accessory. Examples of accessories that may interface with high spool gearbox 120 are transmissions, oil pumps, fuel pumps, hydraulic pumps, electrical generators, hybrid motor/generators, etc. For example, high spool gearbox 120 may transfer mechanical power from the high-pressure spool of turbine engine 110 to a fuel pump. In another example, high spool gearbox 120 may transfer mechanical power from a hybrid motor/generator operating in motor mode to the high-pressure spool of turbine engine 110.

In the example of FIGURES 1A-1E, low spool gearbox 130 is configured to interface with at least one accessory. That is to say, low spool gearbox 130 is configured to transfer mechanical power between low spool gearbox 130 and the at least one accessory. Examples of accessories that may interface with low spool gearbox 130 are transmissions, oil pumps, fuel pumps, hydraulic pumps, electrical generators, hybrid motor/generators, etc. For example, low spool gearbox 130 may transfer mechanical power from the low-pressure spool of turbine engine 110 to a fuel pump. In another example, low spool gearbox 130 may transfer mechanical power from a hybrid motor/generator operating in motor mode to the low-pressure spool of turbine engine 110. While high spool gearbox 120 and low spool gearbox 130 are shown with a particular arrangement, it should be understood that high spool gearbox 120 and low spool gearbox 130 may have any arrangement depending on particular applications. For example, high spool gearbox 120 and low spool gearbox 130 may be arranged to accommodate various high pressure spool or low pressure spool accessories, or various high voltage and low voltage accessories according to particular applications.

In some embodiments, high spool gearbox 120 may be configured as a line replaceable unit (LRU). In some embodiments, the LRU may include at least one accessory interfaced with high spool gearbox 120 as described herein. In some embodiments, low spool gearbox 130 may be configured as an LRU. In some embodiments, the LRU may include at least one accessory interfaced with low spool gearbox 130 as described herein.

Although FIGURES 1A-1E illustrate one example of a system 100 for dual spool power extraction, various changes may be made to FIGURES 1A-1E. For example, turbine engine 110 may include additional spools (such as a mid-pressure spool [mid spool]), and system 100 may include additional gearboxes (such as a mid spool gearbox) configured to transfer mechanical power between the additional spools and the additional gearboxes. Also, while shown here as being disposed at particular position within core compartment 115 of turbine engine 110, high spool gearbox 120 and low spool gearbox 130 may be disposed at any position within core compartment 115. Furthermore, while depicted as an assembly for a ducted turbofan engine, system 100 may be configured as an assembly for a different type of turbine engine, such as a turboshaft engine, or an open rotor gas turbine engine.

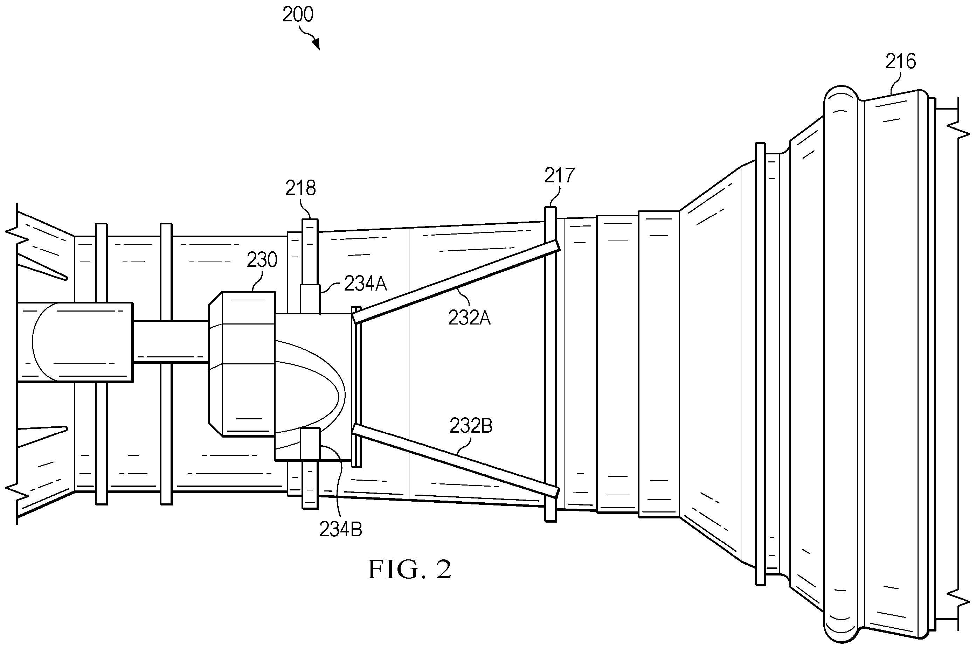

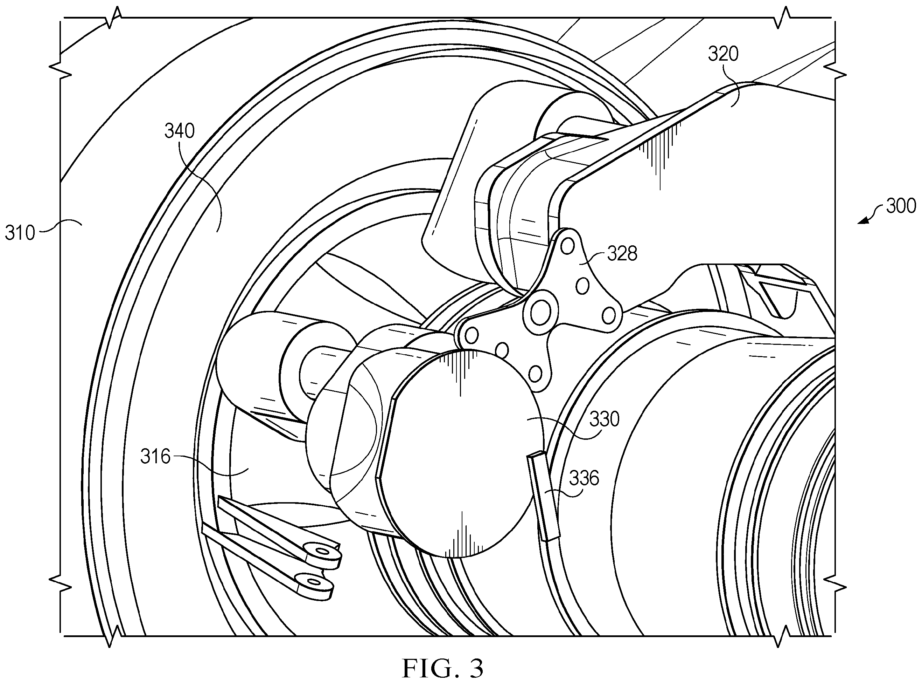

A high spool gearbox and a low spool gearbox may be mechanically coupled (such as mounted) to a turbine engine as well as each other in various ways. The present disclosure provides examples of mechanical coupling between a high spool gearbox, a low spool gearbox, and a turbine engine in FIGURE 2 and FIGURE 3.

FIGURE 2 illustrates an example system 200 for dual spool power extraction in accordance with this disclosure. The example of FIGURE 2 shows an engine core casing 216 for a turbine engine. For example, engine core casing 216 may be similar to engine core casing 116 for a turbine engine similar to turbine engine 110 of FIGURES 1A-1E. Additionally, the example of FIGURE 2 shows a low spool gearbox 230. Low spool gearbox 230 may be similar to low spool gearbox 130 of FIGURES 1A-1E. While not shown, it should be understood that system 200 may further include a high spool gearbox which may be similar to high spool gearbox 120 of FIGURES 1A-1E.

In the example of FIGURE 2, engine core casing 216 includes a first flange 217 and a second flange 218. In some embodiments, low spool gearbox 230 may be mechanically coupled to engine core casing 216 via at least one structural tie, such as a thrust link, a torque link, a rocker link, etc. For example, in FIGURE 2, low spool gearbox 230 is mechanically coupled to first flange 217 via thrust links 232A-232B. Thrust links 232A-232B may be vibration isolated. For example, thrust links 232A-232B may include shock mounts that absorb vibration between thrust links 232A-232B and other components of system 200. Low spool gearbox is further mechanically coupled to second flange 218 via rocker links 234A-234B. Rocker links 234A-234B may be vibration isolated. For example, rocker links 234A-234B may include shock mounts that absorb vibration between rocker links 234A-234B and other components of system 200. While not shown, a high spool gearbox may be mechanically coupled to engine core casing 216 in a manner similar as shown regarding low spool gearbox 230. Also, while not shown, it should be understood that low spool gearbox 230 may be mechanically coupled to a high spool gearbox via at least structural tie, similar to the mechanical coupling of low spool gearbox 230 to engine core casing 216. The connection of engine core casing 216, low spool gearbox 230, and additional gearboxes such a high spool gearbox via thrust links, rocker links, torque links, etc. may establish a direction of relative motion of the gearboxes during dynamic events. This may be referred to as a kinematic layout. Examples of dynamic events include high deflection, and high load scenarios such as a bird strike or fan blade out.

Although FIGURE 2 illustrates one example of a system 200 for dual spool power extraction, various changes may be made to FIGURE 2. For example, the turbine engine of system 200 may include additional spools (such as a mid-pressure spool [mid spool]) and may include additional gearboxes (such as a mid spool gearbox) configured to transfer mechanical power between the additional spools and the additional gearboxes. Also, while shown here as being disposed at a particular position with respect to engine core casing 216, the low spool gearbox 230 may be disposed at any position with respect to engine core casing 216. Furthermore, while depicted as an assembly for a ducted turbofan engine, system 200 may be configured as an assembly for a different type of turbine engine, such as a turboshaft engine, or an open rotor gas turbine engine.

FIGURE 3 illustrates an example system 300 for dual spool power extraction in accordance with this disclosure. As shown in FIGURE 3, system 300 includes a turbine engine 310, a high spool gearbox 320, and a low spool gearbox 330. Turbine engine 310, high spool gearbox 320, and low spool gearbox 330 may be similar as described regarding turbine engine 110, high spool gearbox 120, and low spool gearbox 130 of FIGURES 1A-1E. In the example of FIGURE 3, turbine engine 310 includes an engine core casing 316. Engine core casing 316 may be similar to engine core casing 216 of FIGURE 2. Turbine engine 310 also includes a firewall 340.

In the example of FIGURE 3, low spool gearbox 330 is mechanically coupled to engine core casing 316 via a torque link 336. Torque link 336 may be vibration isolated. For example, torque link 336 may include shock mounts that absorb vibration between torque link 336 and other components of system 300. While not shown in FIGURE 3, it should be understood that high spool gearbox 320 may be similarly coupled to engine core casing 316 via a torque link, and that high spool gearbox 320 and low spool gearbox 330 may be mechanically coupled to engine core casing 316 via a plurality of thrust links similar as described regarding FIGURE 2.

In the example of FIGURE 3, it can be seen that high spool gearbox 320 and low spool gearbox 330 are disposed aft of firewall 340, and that high spool gearbox 320 is mechanically coupled to low spool gearbox 330 via an interlink 328. Interlink 328 enables close coupling of high spool gearbox 320 and low spool gearbox 330. For example, it can be seen that interlink 328 includes a clearance hole. The clearance hole provides high spool gearbox 320 and a low spool gearbox 330 some freedom to move independently in modest amounts, but to share loads during large magnitudes of motion. In some embodiments, interlink 328 may provide vibration isolation between high spool gearbox 320 and low spool gearbox 330.

Although FIGURE 3 illustrates one example of a system 300 for dual spool power extraction, various changes may be made to FIGURE 3. For example, turbine engine 310 of system 300 may include additional spools (such as a mid-pressure spool [mid spool]) and may include additional gearboxes (such as a mid spool gearbox) configured to transfer mechanical power between the additional spools and the additional gearboxes. Also, while shown here as being disposed at particular position with respect to engine core casing 316, high spool gearbox 320 and low spool gearbox 330 may be disposed at any position with respect to engine core casing 316. Furthermore, while depicted as an assembly for a ducted turbofan engine, system 300 may be configured as an assembly for a different type of turbine engine, such as a turboshaft engine, or an open rotor gas turbine engine.

It may be advantageous to set forth definitions of certain words and phrases used throughout this patent document. The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. An apparatus comprising:
a low spool gearbox (130; 230; 330) configured to be disposed within a core compartment (115) of a turbine engine (110; 310), the low spool gearbox (130; 230; 330) configured to transfer mechanical power between a low-pressure spool of the turbine engine (110; 310) and an accessory,
wherein the low spool gearbox (130; 230; 330) is configured to be mechanically coupled to a high spool gearbox (120; 320) via an interlink (328).

2. The apparatus of Claim 1, wherein the low spool gearbox (130; 230; 330) is configured to be mechanically coupled to an engine core casing (116; 216; 316) of the turbine engine (110; 310) via a structural tie (232A,B, 234A,B; 336), optionally wherein the structural tie (232A,B, 234A,B; 336) is configured to provide vibration isolation between the engine core casing (116; 216; 316) and the low spool gearbox (130; 230; 330).

3. An apparatus comprising:
a high spool gearbox (120; 320) configured to be disposed within a core compartment (115) of a turbine engine (110; 310), the high spool gearbox (120; 320) configured to transfer mechanical power between a high-pressure spool of the turbine engine (110; 310) and an accessory,
wherein the high spool gearbox (120; 320) is configured to be mechanically coupled to a low spool gearbox (130; 230; 330) via an interlink (328).

4. The apparatus of Claim 3, wherein the high spool gearbox (120; 320) is configured to be mechanically coupled to an engine core casing (116; 216; 316) of the turbine engine (110; 310) via a structural tie, optionally wherein the structural tie is configured to provide vibration isolation between the engine core casing (116; 216; 316) and the low spool gearbox (130; 230; 330).

5. The apparatus of any preceding claim, wherein the interlink (328) includes a clearance hole configured to provide load sharing between the low spool gearbox (130; 230; 330) and the high spool gearbox (120; 320) with some independent freedom of movement between the low spool gearbox (130; 230; 330) and the high spool gearbox (120; 320).

6. The apparatus of any preceding claim, wherein the interlink (328) is configured to provide vibration isolation between the low spool gearbox (130; 230; 330) and the high spool gearbox (120; 320).

7. The apparatus of any preceding claim, wherein the apparatus is a line removable unit (LRU) that includes the accessory.

8. A system (100; 200; 300) comprising:
a turbine engine (110; 310) including a low-pressure spool and a high-pressure spool;
the apparatus of claim 1 and the apparatus of claim 3;
the low spool gearbox (130; 230; 330) disposed within a core compartment (115) of the turbine engine (110; 310), the low spool gearbox (130; 230; 330) configured to transfer mechanical power between the low-pressure spool and a first accessory;
the high spool gearbox (120; 320) disposed within the core compartment (115) of the turbine engine (110; 310), the high spool gearbox (120; 320) configured to transfer mechanical power between the high-pressure spool and a second accessory; and
an interlink (328) mechanically coupling the low spool gearbox (130; 230; 330) to the high spool gearbox (120; 320).

9. The system of Claim 8 further comprising:
a first oil and coolant system configured to serve the low spool gearbox (130; 230; 330); and
a second oil and coolant system, independent from the first oil and coolant system, configured to serve the high spool gearbox (120; 320).

10. The system of Claim 8 or 9, wherein the interlink (328) includes a clearance hole configured to provide load sharing between the low spool gearbox (130; 230; 330) and the high spool gearbox (120; 320) with some independent freedom of movement between the low spool gearbox (130; 230; 330) and the high spool gearbox (120; 320).

11. The system of Claim 8, 9 or 10, wherein the interlink (328) is configured to provide vibration isolation between the low spool gearbox (130; 230; 330) and the high spool gearbox (120; 320).

12. The system of any of claims 8 to 11, wherein:
the system (100; 200; 300) further includes a plurality of structural ties (232A,B, 234A,B; 336);
the turbine engine (110; 310) includes an engine core casing (116; 216; 316);
the low spool gearbox (130; 230; 330) is mechanically coupled to the engine core casing (116; 216; 316) via at least a first structural tie of the plurality of structural ties (232A,B, 234A,B; 336); and
the high spool gearbox (120; 320) is mechanically coupled to the engine core casing (116; 216; 316) via at least a second structural tie of the plurality of structural ties (232A,B, 234A,B; 336), optionally wherein at least one structural tie of the plurality of structural ties (232A,B, 234A,B; 336) is configured to provide vibration isolation between the engine core casing (116; 216; 316) and at least one of the low spool gearbox (130; 230; 330) and the high spool gearbox (120; 320).

13. The system of Claim 12, wherein the interlink (328) or at least one structural tie of the plurality of structural ties (232A,B, 234A,B; 336) is configured to establish a kinematic layout for the low spool gearbox (130; 230; 330) and the high spool gearbox (120; 320).

14. The system of any of claims 8 to 13, wherein the low spool gearbox (130; 230; 330) and the high spool gearbox (120; 320) are disposed aft of an engine firewall (340).

15. The system of any of claims 8 to 14, wherein the low spool gearbox (130; 230; 330) and the high spool gearbox (120; 320) are arranged within the core compartment (115) according to locations of the first accessory and the second accessory within the system.
